(19) Europäisches Patentamt
European Patent Office
Office européen des brevets

(11) **EP 1 636 391 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(51) Int Cl.:
*C21D 9/00* (2006.01)      *F27D 5/00* (2006.01)
*B29D 28/00* (2006.01)      *B29C 70/34* (2006.01)

(21) Anmeldenummer: **04739863.1**

(22) Anmeldetag: **14.06.2004**

(86) Internationale Anmeldenummer:
**PCT/EP2004/006381**

(87) Internationale Veröffentlichungsnummer:
**WO 2004/111562 (23.12.2004 Gazette 2004/52)**

(54) **Träger für Bauteile**

Support for structural components

Support pour composants

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.06.2003 DE 10327095**
**06.10.2003 DE 10346765**

(43) Veröffentlichungstag der Anmeldung:
**22.03.2006 Patentblatt 2006/12**

(73) Patentinhaber: **Schunk Kohlenstofftechnik GmbH**
**D-35452 Heuchelheim (DE)**

(72) Erfinder:
• **SCHEIBEL, Thorsten**
**61231 Bad Nauheim (DE)**
• **WEISS, Roland**
**35625 Hüttenberg (DE)**
• **HENRICH, Martin**
**35582 Wetzlar (DE)**
• **EBERT, Marco**
**35083 Wetter (DE)**
• **SCHNEWEIS, Stefan**
**61279 Grävenwiesbach (DE)**

(74) Vertreter: **Stoffregen, Hans-Herbert**
**Patentanwalt**
**Postfach 21 44**
**63411 Hanau (DE)**

(56) Entgegenhaltungen:
**EP-A- 0 560 038        DE-A- 19 737 212**
**DE-A- 19 957 906        DE-U- 29 512 569**
**US-A- 2 962 273**

• **PATENT ABSTRACTS OF JAPAN Bd. 2000, Nr. 14, 5. März 2001 (2001-03-05) -& JP 2000 304459 A (ISOLITE INSULATING PRODUCTS CO LTD), 2. November 2000 (2000-11-02)**

EP 1 636 391 B1

**Beschreibung**

Die Erfindung bezieht sich auf einen Träger für einem Wärmebehandlungsprozess zu unterziehende Bauteile, umfassend zumindest einen Rahmen und von diesem ausgehendes Gitter aus sich kreuzenden Strängen, wobei der Rahmen aus einem oder mehreren vorzugsweise ein Vieleck bildenden Schenkeln besteht und wobei der Rahmen aus temperaturbeständigem Material und die Stränge aus Kohlenstofffasern oder keramischen Fasern bestehen, die von dem oder den Schenkeln des Rahmens ausgehend das Gitter bilden.

Um schlanke metallische bzw. keramische Bauteile und Komponenten bei Wärmebehandlungsprozessen zu positionieren bzw. zu fixieren, werden diese in Halterahmen eingesetzt. Bei den Wärmebehandlungsprozessen handelt es sich z. B. um Sintervorgänge, Härtungs-, Vergütungs- oder Lötprozesse. Übliche Prozesstemperaturen liegen zwischen 700 °C und 2600 °C, wobei typischerweise zwischen 800 °C und 1600 °C gearbeitet wird.

Nach dem Stand der Technik bestehen entsprechende Gitter aufweisende Rahmen aus Metall. Die Gitter werden dabei durch Stränge in Form von Rundstäben mit z. B. einem Durchmesser von 2 mm gebildet. Entsprechende Haltevorrichtungen zeigen jedoch erhebliche Nachteile, die u. a. im Folgenden zu sehen sind:

- Verzug bei thermischen Zyklen,
- Kriechen der gesamten Struktur durch Temperatureinwirkung,
- hohes Eigengewicht,
- hohe Wärmekapazität,
- geringe Lebensdauer durch Versprödung,
- hoher Richtaufwand, um Einsatzfähigkeit zu verlängern,
- erhöhter Ausschuss der zu behandelnden Teile durch Verzug der Haltevorrichtung.

Insbesondere durch eine verminderte Formstabilität bereitet es häufig Probleme, entsprechende Haltevorrichtungen mittels Handhabungsgeräten wie Roboter zu be- bzw. entladen.

Aus der DE-A-199 57 906 ist ein Faserverbundteil in Gitterstruktur bekannt, das im Hochtemperaturofen- und -anlagenbau, in der Härtereitechnik oder Sintertechnik als Rost benutzt wird. Zur Herstellung wird ein Faservorformling benutzt, der insbesondere nach der TFP (Tailored Fiber Placement) Technologie hergestellt und sodann pyrolysiert, d: h. carbonisiert bzw. graphitiert wird.

Ein Träger für Härtegut wird in dem DE-U-295 12 569 beschrieben. Der Träger besteht dabei aus kohlenstofffaserverstärktem Kohlenstoff-Material (CFC-Material), der eine Schutzschicht aus SiC, BN oder TiN aufweisen kann. Der Träger umfasst zusammensteckbare Seitenschenkel mit zueinander fluchtenden Aussparungen, durch die zu härtendes Gut durchgesteckt wird.

Aus der DE-A-197 37 212 ist ein Werkstückträger zum Wärmebehandeln von Werkstücken bekannt. Der Werkstückträger kann aus einem einstückigen monolithisch ausgebildeten Rahmen bestehen, auf den gekröpfte Stäbe legbar sind, die zur Aufnahme von Werkstücken dienen. Nach einer weiteren Ausführungsform besteht der Träger aus einer Rohrkonstruktion, um die Faserbündel gewickelt werden, die beabstandet zueinander verlaufen.

Aus der JP-A-2000 304459 ist ein gitterförmiger Träger aus Keramikmaterial bekannt, der aus einem Rahmen und einem von diesem klemmend aufgenommenen Gitter die Form eines Keramikgewebes aufweist.

Zur Herstellung eines Gitters ist nach der EP-A-0 560 038 eine Nuten aufweisende Form vorgesehen, in die Fasern eingelegt werden, um sodann unter Druck ausgehärtet zu werden.

Ein Trägerkorb aus Metall zur Aufnahme von Bauteilen, die einem Wärmebehandlungsprozess unterzogen werden, ist aus der US-A-2,962,273 bekannt.

Der vorliegenden Erfindung liegt das Problem zu Grunde, einen Träger der eingangs genannten Art so weiterzubilden, dass auch bei starken thermischen Belastungen bzw. Temperaturschwankungen ein verzugsfreier Träger zur Verfügung gestellt wird, um Bauteile im gewünschten Umfang einer Wärmebehandlung unterziehen zu können. Nach einem weiteren Aspekt soll sichergestellt werden, dass Kontaktreaktionen zwischen zu behandelnden Bauteilen und dem Träger bzw. dem Gitter verhindert werden. Der Träger bzw. das Gitter selbst soll mit konstruktiv einfachen Maßnahmen herstellbar sein.

Das Problem wird durch einen Träger der eingangs genannten Art erfindungsgemäß im Wesentlichen dadurch gelöst, dass das Gitter durch einen Abschnitt eines zwischen Schenkeln des Rahmens verlaufenden Endlosfaserbündels in Form ein- oder mehrlagiger Faserstränge oder verzwirnter Garne aus kohlenstoffverstärktem Kohlenstoffmaterial und/oder Keramikmaterial gebildet ist, wobei das Endlosfaserbündel in Kette-Schuss-Webstruktur zwischen Schenkeln des Rahmens verläuft. Hierdurch ergibt sich eine grobe Struktur, deren Maschenweite individuell ausgelegt werden kann, um Bauteile gewünschter Größe aufzunehmen.

Besteht der Rahmen aus einem Schenkel, so weist dieser einen gebogenen Verlauf auf, um z. B. ein Oval oder einen Kreis aufzuspannen.

Der Träger kann aus einem einzigen Rahmen oder aus mehreren senkrecht bzw. parallel zueinander verlaufenden Rahmen bestehen, die sich quasi zu einem einseitig offenen Korb ergänzen.

Losgelöst hiervon, ob ein- oder mehrlagige Faserstränge bzw. verzwirnte Fasern bzw. Garne in Form von z. B. Kordel als Faserbündel verwendet werden, die aus Kohlenstofffasern oder keramischen Fasern bestehen, weisen nach einer Ausführungsform die Schenkel des Rahmens längsrandseitig Aussparungen auf, die von Abschnitten des Endlosfaserbündels zum Spannen des Gitters durchsetzt sind. Die Aussparungen selbst bilden insbesondere eine Kammgeometrie im jeweiligen Längsrand.

Alternativ besteht die Möglichkeit, dass die Schenkel mit Durchbrechungen wie Bohrungen versehen sind, die von dem Endlosfaserbündel durchsetzt sind. In Abhängigkeit von der Position der Aussparungen bzw. Durchbrechungen bzw. deren Nutzung kann mit einfachen Maßnahmen der Gitterabstand, d. h. die Maschenweite des Gitternetzes variiert werden.

Des Weiteren ist vorgesehen, dass das in Webstruktur verlegte Endlosfaserbündel unter Vorspannung zwischen den Schenkeln verläuft, wodurch sichergestellt ist, dass das fertige Gitter nicht durchhängen kann, also eine Ebene aufspannt.

Als Material für die Rovings bzw. Fasern kommt insbesondere $Al_2O_3$, SiC, BN, C oder $B_4C$ und/oder Kombinationen dieser in Frage.

Der Rahmen besteht vorzugsweise aus CFC, Graphit oder Faserkeramik. Der Rahmen kann in TFP (Tailored Fiber Placement)-Technik hergestellte Schenkel aufweisen, die durch Steckverbindungen zusammengesetzt werden können. Es ist aber auch die Möglichkeit gegeben, aus einer kohlenstofffaserverstärkten Kohlenstoffplatte einen Rahmen z. B. mittels Wasserstrahl auszuschneiden. Auch können Abschnitte einer entsprechenden Platte zu einem Rahmen zusammengesetzt werden.

Sofern der Träger eine quasi zweidimensionale Geometrie aufweist, also aus einem einzigen Rahmen mit von dessen Schenkeln ausgehendem Gitter besteht, sollte bevorzugterweise jeder Schenkel eine Ebene aufspannen, die senkrecht zur von dem Gitter gebildeten Ebene verläuft. Bestehen die Schenkel des Rahmens aus Flachelementen, sollten sich demzufolge dessen Flachseiten senkrecht zu dem Gitter erstrecken.

Weist der Träger eine Korbgeometrie auf, also z. B. die eines einseitig offenen Quaders, besteht der Träger aus Boden- und Seitenrahmen, die jeweils Halterung für ein Gitter sind.

Dabei ist bevorzugterweise vorgesehen, dass oberer Schenkel eines jeden Seitenrahmens ein Flachelement und/oder unterer Schenkel ein Winkelelement und/oder senkrecht zu diesem verlaufender Seitenschenkel jeweils ein Rundelement sind.

Das als Schenkel ausgebildete Flachelement sollte des Weiteren mit seiner Flachseite eine Ebene aufspannen, in der oder in etwa der das von dem Rahmen gehaltene Gitter verläuft.

Aneinandergrenzende Flachscenkel, die rechtwinklig oder in etwa rechtwinklig aufeinander stoßen, können über eine Steckverbindung verbunden sein, die sich ihrerseits innerhalb eines Rundelementes erstrecken. Dabei ist vorgesehen, dass jeweiliger Flachschenkel des Rahmens außenlängsrandseitig bündig in jeweilige Stirnfläche eines Rundschenkels übergeht.

Als Fasermaterial kommen insbesondere $Al_2O_3$ und/oder SiC und/oder BN und/oder C oder Kombinationen einer oder mehrere dieser in Frage.

Ferner kann eine Matrix für die Webstruktur vorgesehen sein, die aus nachstehenden Werkstoffen und/oder Kombinationen dieser bestehen kann: Kohlenstoff, $B_4C$, $Al_2O_3$, SiC, $Si_3N_4$ oder Mullit. Dabei kann die Matrix aus der Gasphase mittels CVD und/oder CV1 abgeschieden werden oder durch Pyrolyse eines Precursormaterials wie Phenolharz, Furanharz oder Silizium-Precursoren hergestellt werden. Eine Kombination entsprechender Prozessschritte ist gleichfalls möglich.

Um Kontaktreaktionen zwischen thermisch zu behandelnden Bauteilen und dem Träger bzw. Gitter auszuschließen, kann zusätzlich eine Oberflächenbeschichtung auf die faserkeramische Haltestruktur aufgebracht werden. Die Oberflächenbeschichtung kann aus Oxiden, Nitriden und/oder Carbiden der 3. und 4. Hauptgruppe und/oder 3. bis 6. Nebengruppe des Periodensystems und/oder Kohlenstoff bestehen.

Die Stege des fertigen Gitters weisen typischerweise einen Durchmesser zwischen 1mm und 10 mm, bevorzugterweise zwischen 2 mm und 4 mm auf.

Der Rahmen ist vorzugsweise quadratisch oder rechteckig mit einer Schenkellänge bis 2000 mm und/oder einer Höhe zwischen 10 mm und 300 mm. Typische Abmessungen können sein:

$$450 \text{ x } 450 \text{ x } 50 \text{ mm}^3 \text{ bzw.}$$

$$900 \text{ x } 600 \text{ x } 40 \text{ mm}^3.$$

Andere Geometrien des Rahmens wie Kreis oder Oval sind gleichfalls möglich. In diesem Fall kann der Rahmen z. B. aus einem entsprechend gebogenen Schenkel oder aus z. B. zwei sich zu einer entsprechenden Geometrie ergänzenden Schenkeln bestehen.

Erfindungsgemäß wird eine faserkeramische Haltestruktur bestehend aus Rahmen und Gitter zur Verfügung gestellt, mit der metallische und/oder keramische Bauteile oder Komponenten dieser in einem Wärmebehandlungsprozess positioniert bzw. fixiert werden können. Dabei ist insbesondere auf Grund der Gitterstruktur die Möglichkeit gegeben, eine senkrechte Chargierung schlanker Bauteile bzw. Komponenten im gewünschten Umfang vorzunehmen. Hierzu ist entsprechend die Maschenweite des Gitters auszulegen. Hierzu verläuft das Gitter beabstandet zum jeweiligen Längsrand eines jeden Rahmenschenkels.

Auf Grund der erfindungsgemäßen Lehre ergibt sich ein verzugsfreier Träger ungeachtet vorgenommener thermischer Zyklen, so dass ein Richtaufwand nicht gegeben ist. Der erfindungsgemäße Träger zeigt eine Thermoschockbeständigkeit, niedrige Dichte und geringere Wärmekapazität. Eine Kriechneigung ist gleichfalls nicht gegeben. Ferner sind als besondere Vorteile zu nennen, dass eine Versprödung nicht erfolgt. Auch ist eine lange Lebensdauer gewährleistet. Im Vergleich zu metallischen Haltevorrichtungen ist eine erhebliche Ausschussreduzierung festzustellen.

Ein weiterer Vorteil der Erfindung ist die gute Durchströmbarkeit der Gitterstruktur. Hieraus ergeben sich große Vorteile beim Einsatz in der Härtetechnik, z. B. bei der Öl- oder Gasabschreckung.

Die zuvor erläuterten Vorteile betreffen nicht nur den Träger an sich, sondern auch dessen Komponenten, insbesondere das Gitter, das als gesondertes Bauteil genutzt werden kann. Daher bezieht sich die Erfindung auch auf ein Verfahren zum Herstellen eines Gitters aus sich kreuzenden Strängen aus Kohlenstofffasern oder keramischen Fasern unter Verwendung eines Rahmens, von dem ausgehend die Stränge gewünschter Gitterstruktur entsprechend gespannt werden, sodann in die Fasern Matrix eingebracht und anschließend das Gitter von dem Rahmen entfernt wird. Dabei kann das Gitter von von dem Rahmen ausgehenden Abschnitten getrennt wie abgeschnitten werden. Das Gitter kann auch als Einheit von dem Rahmen entfernt werden, sofern die Stränge von randseitigen Aussparungen ausgehen.

Die Matrix kann aus der Gasphase abgeschieden und/oder durch Pyrolyse eines Precursormaterials ausgebildet werden. Ferner kann vor Entfernen des Gitters von dem Rahmen eine Oberflächenbeschichtung erfolgen. Als Materialien hierfür können Oxiden, Nitriden und/oder Carbiden der 3. und 4. Hauptgruppe und/oder 3. bis 6. Nebengruppe des Periodensystems und/oder Kohlenstoff oder Kombinationen einiger dieser verwendet werden.

Als Fasermaterial kommen insbesondere $Al_2O_3$, SiC, BN, C oder Kombinationen bzw. Teilkombinationen dieser in Frage. Als Werkstoff für die Matrix können Kohlenstoff, $B_4C$, $Al_2O_3$, SiC, $Si_3N_4$ oder Mullit bzw. Kombinationen oder Teilkombinationen dieser verwendet werden.

Weitere Einzelheiten, Vorteile und Merkmale der Erfindung ergeben sich nicht nur aus den Ansprüchen, den diesen zu entnehmen Merkmalen - für sich und/oder in Kombination sondern auch aus der nachfolgenden Beschreibung eines der Zeichnung zu entnehmenden bevorzugten Ausführungsbeispiels.

Es zeigen:

Fig. 1   ein erstes Ausführungsbeispiel eines Trägers,

Fig. 2   ein zweites Ausführungsbeispiel eines Trägers,

Fig. 3   eine erste Ansicht eines dritten Ausführungsbeispiels eines Trägers und

Fig. 4   eine zweite Ansicht des Trägers gemäß Fig. 3.

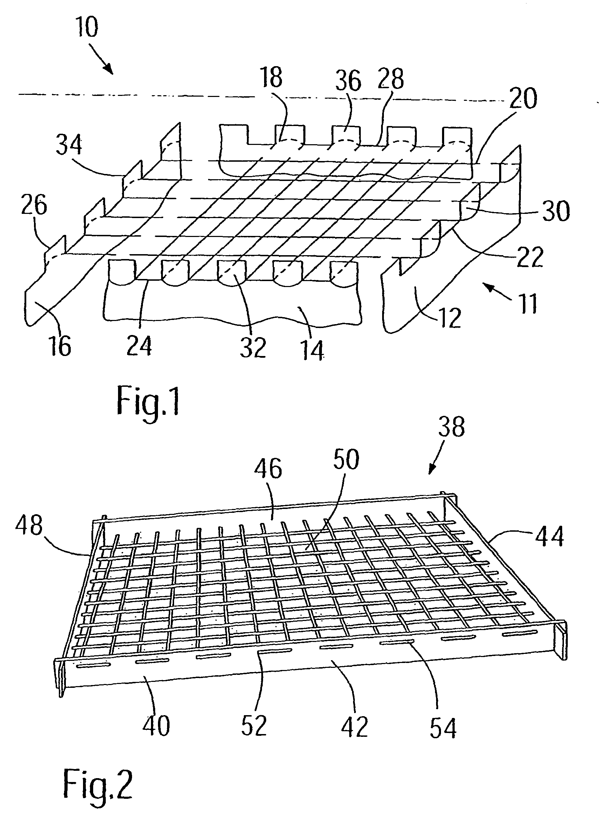

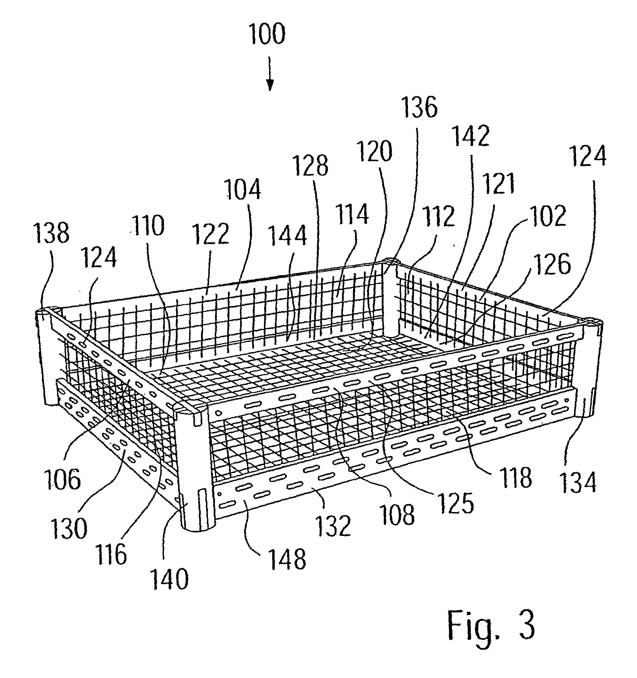

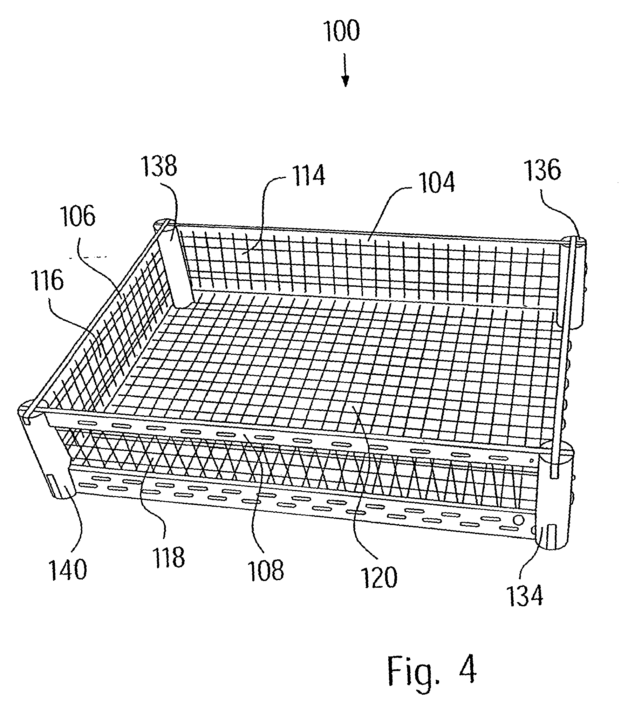

Den Fig. 1 und 2 sind erfindungsgemäße Ausführungsformen eines quasi zweidimensionaJen Trägers und den Fig. 3 und 4 ein dreidimensionaler Träger in Form eines offenen Korbes zu entnehmen, der eine Quadergeometrie aufweist.

In der Fig. 1 ist rein prinzipiell ein Träger 10 dargestellt, der als faserkeramische Haltestruktur insbesondere zum Positionieren bzw. Fixieren von z. B. metallischen oder keramischen Bauteilen oder Komponenten bei Wärmebehandlungsprozessen zum Einsatz gelangen soll. Bei den Wärmebehandlungsprozessen handelt es sich z. B. um Sintervorgänge, Härtungs-, Vergütungs- oder Lötprozesse, die bei Temperaturen zwischen 700 °C und 2600 °C typischerweise zwischen 800 °C und 1600 °C durchgeführt werden.

Damit der Träger 10 ungeachtet auftretender thermischer Zyklen verzugsfrei ist, besteht dieser aus kohlenstofffaserverstärktem Kohlenstoff bzw. einer Faserkeramik und umfasst einen Rahmen 1 mit Schenkeln 12, 14, 16, 18 sowie ein von diesem ausgehendes bzw. aufgespanntes Gitter 20. Das Gitter 20 ist im Ausführungsbeispiel der Fig. 1 über eine kammartige Struktur oberer Längsränder 22, 24, 26, 28 der Schenkel 12, 14, 16, 18 bildende Vorsprünge 30, 32, 34, 36 gespannt und besteht vorzugsweise aus einem Endloskohlenstofffaserstrang. Auch kommt ein keramischer Faserstrang in Frage.

Es handelt sich insbesondere um einen ein- oder mehrlagigen Faserstrang (Roving).

Der das Gitter 20 bildende Faserstrang weist als Fasennaterial insbesondere $Al_2O_3$, SiC, BN, C oder Kombinationen bzw. Teilkombinationen dieser auf.

Aus CFC- bzw. Keramikmaterial bestehen auch die Schenkel 12, 14, 16, 18, die entsprechend dem Ausführungsbeispiel der Fig. 2 zusammengesteckt oder in sonstiger Art verbunden sein können. Auch bestünde die Möglichkeit, die Schenkel durchgehend, also den Rahmen integral auszubilden, durch z. B. Ausschneiden aus einer kohlenstofffaserverstärkten Kohlenstoffplatte mittels z. B. Wasserstrahl.

Sofern das Gitter 20 eine Matrix aufweist, kann diese aus der Gasphase (z. B. CVD/CVI) abgeschieden werden oder durch Pyrolyse eines Precursormaterials wie z. B. Phenolharz, Furanharz oder Si-Precursoren ausgebildet werden.

Als Materialien für die Matrix kommen Kohlenstoff, $B_4C$, $Al_2O_3$, SiC, $Si_3N_4$ oder Mullit bzw. Kombinationen oder Teilkombinationen dieser in Frage.

Zusätzlich kann eine Oberflächenbeschichtung vorgesehen sein, die aus Oxiden, Nitriden und/oder Carbiden der 3. und 4. Hauptgruppe und/oder 3. bis 6. Nebengruppe des Periodensystems und/oder Kohlenstoff oder Kombinationen bzw. Teilkombinationen dieser bestehen kann, um eine Kontaktreaktion zwischen der Haltestruktur und den thermisch zu behandelnden Bauteilen zu verhindern. Unter Haltestruktur wird der Rahmen 11 und/oder das Gitter 20 verstanden.

Ein der Fig. 2 zu entnehmender Träger 38 umfasst ebenfalls einen Rahmen 40 mit Schenkeln 42, 44, 46, 48, die zusammengesteckt sind und zwischen denen ein Gitter 50 gespannt ist. Hierzu weisen die Schenkel 42, 44, 46, 48 Bohrungen 52, 54 auf die von ein- oder mehrlagigen Fasersträngen bzw. verzwirntern Garn durchsetzt sind, die entsprechend der zuvor erfolgten Erläuterungen aus Kohlenstofffasern oder keramischen Fasern besteht bzw. bestehen.

Die insbesondere aus ein- oder mehrlagigen Fasersträngen (Rovings) oder verzwirnten Fasersträngen (Kordel) bestehenden Kohlenstofffasern zur Bildung der Gitter 20, 50 sind zu einer Webstruktur verlegt, wobei in Abhängigkeit von den von den Schenkeln 12, 14, 16, 18 bzw. 42, 44, 46, 48 ausgehenden und genutzten Vorsprüngen 32, 34, 36, 30 bzw. Bohrungen 52, 54 der Abstand zwischen den Strängen im gewünschten Umfang vorgegeben werden kann. Auch sind die das Gitter 20, 50 bildenden Stränge, also insbesondere die Faserstränge bzw. Garne in einer Webstruktur verlegt (Kette und Schuss).

Den Fig. 3 und 4 ist ein Träger 100 in Korbform zu entnehmen, der seinerseits aus Seitenrahmen 102, 104, 106, 108 sowie Bodenrahmen 110 und von diesen aufgespannten Gittern 112, 114, 116, 118 und 120 besteht. Ein entsprechender Träger 100 ist zum Beispiel zur Aufnahme von metallischen oder keramischen Bauteilen oder Komponenten bestimmt, die einem VVärmebehandlungsprozess unterzogen werden sollen.

Die Seitenrahmen 102, 104, 106, 108 bestehen aus oberen Flachelementen 121, 122, 124 und 125 sowie bodenseitig verlaufenden Winkelelementen 126, 128, 130, 132, die ihrerseits den Bodenrahmen 110 bilden. Rundelemente 134, 136, 138, 140 bilden die Seitenschenkel der Seitenrahmen 102, 104, 106, 108.

Des Weiteren ist den Fig. 3 und 4 zu entnehmen, dass die Längsschenkel 121, 122, 124, 125, 126, 128, 130, 132 über Steckverbindungen miteinander verbunden sind, die sich innerhalb der Rundelemente 134, 136, 138, 140 erstrecken und außenseitig bündig ineinander übergehen, wie die Darstellungen verdeutlichen.

Die Gitter 112, 114, 116, 118 werden von ein- oder mehrlagigen Fasersträngen gebildet, wie dies anhand der Fig. 1 und 2 verdeutlicht wird. Insoweit wird auf die diesbezüglichen Ausführungen verwiesen.

Die die Gitter bildenden Stränge durchsetzen dabei nicht näher bezeichnete Bohrungen in den Seitenschenkeln 121, 122, 124, 126 sowie den in deren Ebenen verlaufenden Schenkelabschnitten 142, 144, 146, 148 der Winkelelemente 126, 128, 130 und 132. Die entlang des Gitters 120 verlaufenden Abschnitte der Winkelelemente 126, 128, 130, 132 erstrecken sich entlang der Außenfläche des Gitters 120 und dienen somit als Auflage für den Korb 100.

Die Gitter 112, 114, 116, 118, 120 bzw. deren Faserstränge weisen als Fasermaterial insbesondere $Al_2O_3$, SiC, BN, C oder Kombinationen bzw. Teilkombinationen dieser auf. Sofern das jeweilige Gitter 112, 114, 116, 118, 120 eine Matrix aufweist, kann diese aus der Gasphase (zum Beispiel CVD/CVI) abgeschieden werden oder durch Pyrolyse eines Precursormaterials wie zum Beispiel Phenolharz, Furanharz oder Si-Precursoren ausgebildet werden.

Als Materialien für die Matrix kommen Kohlenstoff, $B_4C$, $Al_2O_3$, SiC, $Si_3N_4$ oder Mullit bzw. Kombinationen oder Teilkombinationen dieser in Frage.

Ferner kann eine Oberflächenbeschichtung vorgesehen sein, die aus Oxiden, Nitriden und/oder Carbiden der dritten und vierten Hauptgruppe und/oder 3. bis 6. Nebengruppe des Periodensystems und/oder Kohlenstoff oder Kombinationen bzw. Teilkombinationen dieser bestehen kann, um eine Kontaktreaktion zwischen der Haltestruktur und den thermisch zu behandelnden Bauteilen zu verhindern.

Unter Haltestruktur wird der jeweilige Rahmen 112, 114, 116, 118, 120 und/oder das von diesem aufgespannte Gitter 102, 104, 106, 108, 110 verstanden.

Die Schenkel 121, 122, 124, 125, 126, 128, 130, 132, 134, 136, 138, 140 können aus CFC- bzw. Keramikmaterial bestehen.

Kann der Träger 10, 38 bzw. der Korb 100 zum Positionieren bzw. Fixieren von einem Wärmebehandlungsprozess zu unterziehenden Bauteilen genutzt werden, so besteht auch die Möglichkeit, das jeweilige Gitter 20, 50 an sich zu verwenden. Hierzu kann dieses von dem Rahmen 11, 40 gelöst werden. So ist es bei dem Ausführungsbeispiel der Fig. 1 nur erforderlich, dass das Gitter 20 von den Vorsprüngen 30, 32, 34, 36 entfernt also abgezogen wird. Zur Benutzung des Gitters 50 nach der Fig. 2 sind die die Bohrungen 52, 54 durchsetzenden Abschnitte abzutrennen.

Zu erwähnen ist des Weiteren, dass der kohlenstofffaserverstärkte Kohlenstoffkörper - sei es das Gitter, sei es der Rahmen - durch Silizieren mittels z. B. Kapillar- oder Flüssigkeüsinfiltrationsprozess mit flüssigem Silicium in C-SiC bzw. C/C-SiC umgewandelt werden kann.

**Patentansprüche**

1. Träger (10, 38, 100) für einem Wärmebehandlungsprozess zu unterziehende Bauteile, umfassend zumindest einen Rahmen (11, 40, 102, 104, 106, 108, 110) und von diesem ausgehendes Gitter (20, 50, 112, 114, 116, 118, 120) aus sich kreuzenden Strängen, wobei der Rahmen aus einem oder mehreren vorzugsweise ein Vieleck bildenden Schenkeln (12, 14, 16, 18, 42, 44, 46, 48, 121, 122, 124, 125, 126, 128, 130, 132, 134, 136, 138, 140) besteht und wobei der Rahmen (11, 40, 102, 104, 106, 108, 100) aus temperaturbeständigem Material und die Stränge aus Kohlenstofffasern oder keramischen Fasern bestehen, die von dem oder den Schenkeln (12, 14, 18, 42, 44, 46, 48, 121, 122, 124, 125, 126, 128, 130, 132, 134, 136, 138, 140) des Rahmens ausgehend das Gitter (20, 50, 112, 114, 116, 118, 120) bilden, **dadurch gekennzeichnet, dass** das Gitter (20, 50) durch einen Abschnitt eines zwischen Schenkeln (12, 14, 16, 18, 42, 44, 46, 48) des Rahmens verlaufenden Endlosfaserbündels in Form ein- oder mehrlagiger Faserstränge oder verzwirnter Garne aus kohlenstoffverstärktem Kohlenstoffmaterial und/oder Keramikmaterial gebildet ist, wobei das Endlosfaserbündel in Kette-Schuss-Webstruktur zwischen Schenkeln des Rahmens verläuft.

2. Träger nach Anspruch 1,
   **dadurch gekennzeichnet,**
   **dass** die Schenkel (12, 14, 16, 18, 42, 44, 46, 48) des Rahmens senkrecht zur von dem Gitter (20, 50) aufgespannten Ebene verlaufen.

3. Träger nach Anspruch 2,
   **dadurch gekennzeichnet,**
   **dass** der Träger (100) aus mehreren einen dreidimensionalen Körper bildenden Rahmen (102, 104, 106, 108, 110) besteht und insbesondere eine Korbgeometrie aufweist.

4. Träger nach zumindest Anspruch 1,
   **dadurch gekennzeichnet,**
   **dass** die Schenkel (12, 14, 16, 18) in ihren jeweiligen Längsrändern Aussparungen aufweisen, die von Abschnitten des Endlosfaserbündels zum Spannen des Gitters (20, 50) durchsetzt sind.

5. Träger nach Anspruch 4,
   **dadurch gekennzeichnet,**
   **dass** die Aussparungen eine Kammgeometrie im jeweiligen Längsrand (24, 26, 28, 30) des Rahmenschenkels (12, 14, 16, 18) bilden.

6. Träger nach zumindest Anspruch 1,
   **dadurch gekennzeichnet,**
   **dass** die Schenkel (42, 44, 46, 48) des Rahmens (40) Durchbrechungen wie Bohrungen (52, 54) aufweisen, die von dem Endlosfaserbündel durchsetzt sind.

7. Träger nach zumindest Anspruch 1,
   **dadurch gekennzeichnet**
   **dass** das in Webstruktur verlegte Endlosfaserbündel unter Vorspannung zwischen den Schenkeln (12, 14, 16, 18, 42, 44, 46, 48) verläuft.

8. Träger nach zumindest Anspruch 1,
   **dadurch gekennzeichnet,**
   **dass** der Rahmen (11, 52) integral aus einer kohlenstofffaserverstärkten Kohlenstoffplatte ausgeschnitten ist.

9. Träger nach zumindest Anspruch 1,
   **dadurch gekennzeichnet,**
   **dass** die den Rahmen (40) bildenden Schenkel (42, 44, 46, 48) mittels Steckverbindungen zusammengesetzt sind.

10. Träger nach zumindest Anspruch 1,
    **dadurch gekennzeichnet,**
    **dass** Basis des Rahmens (11, 38) oder dessen Schenkeln (12, 14, 16, 18, 42, 44, 46, 48) ein mittels TFP-Technologie hergestellter pyrolysierter Faservorformling ist.

11. Träger nach zumindest Anspruch 1,
    **dadurch gekennzeichnet,**
    **dass** der Rahmen (11, 40) aus aus kohlenstofffaserverstärkter Kohlenstoffplatte wie CFC-Platte insbesondere mittels Wasserstrahlschneiden abgetrenntem Abschnitt bzw. abgetrennten Abschnitten besteht.

12. Träger nach zumindest Anspruch 1,
    **dadurch gekennzeichnet,**
    **dass** das Fasermaterial aus $Al_2O_3$ und/oder $SiC$ und/oder $BN$ und/oder $C$ besteht oder dieses enthält.

13. Träger nach zumindest Anspruch 1,
    **dadurch gekennzeichnet,**
    **dass** das Gitter (20, 50) eine Matrix aufweist, die aus Kohlenstoff, $B_4C$, $Al_2O_3$, $SiC$, $Si_3N_4$ und/oder Mullit besteht oder diese enthält.

14. Träger nach Anspruch 13,
    **dadurch gekennzeichnet,**
    **dass** die Matrix aus der Gasphase abgeschieden und/oder durch Pyrolyse eines Precursormaterials ausgebildet ist.

15. Träger nach Anspruch 14,
    **dadurch gekennzeichnet,**
    **dass** das Precursormaterial Phenolharz und/oder Furanharz und/oder Si-Precursor ist.

16. Träger nach zumindest Anspruch 1,
    **dadurch gekennzeichnet,**
    **dass** zumindest das Gitter eine Beschichtung aus Oxiden, Nitriden und/oder Carbiden der 3. und 4. Hauptgruppe und/oder 3. bis 6. Nebengruppe des Periodensystems und/oder Kohlenstoff aufweist oder dieses enthält.

17. Träger nach zumindest Anspruch 1,
    **dadurch gekennzeichnet,**
    **dass** der Rahmen (11, 40) aus kohlenstofffaserverstärktem Kohlenstoff, Faserkeramik oder Graphit besteht.

18. Träger nach zumindest Anspruch 1,
    **dadurch gekennzeichnet,**
    **dass** der Träger (100) eine einseitig offene Quadergeometrie mit Boden- und Seitenrahmen (102, 104, 106, 108, 110) aufweist, die jeweils Halterungen für ein Gitter (112, 114, 116, 118, 120) sind.

**19.** Träger nach zumindest Anspruch 18,
**dadurch gekennzeichnet,**
**dass** oberer Schenkel (121, 122, 124, 125) eines jeden Seitenrahmens (112, 114, 116, 118) ein Flachelement und/oder unterer Schenkel (126, 128, 130, 132) eines jeden Seitenrahmens ein Winkelelement und/oder senkrecht zu diesen verlaufende Seitenschenkel (134, 136, 138, 140) jeweils ein Rundelement sind.

**20.** Träger nach zumindest Anspruch 19,
**dadurch gekennzeichnet,**
**dass** das Flachelement mit seiner Flachseite eine Ebene aufspannt, in der oder in etwa der das von dem Rahmen (102, 104, 106, 108) aufgespannte Gitter (112, 114, 116, 118) verläuft.

**21.** Träger nach zumindest Anspruch 19,
**dadurch gekennzeichnet,**
**dass** jeweiliges Flachelement (121, 122, 124, 125) des Seitenrahmens (112, 114, 116, 118) außenlängsrandseitig bündig in jeweilige Stirnfläche eines Rundelementes (134, 136, 138, 140) übergeht.

**22.** Träger nach zumindest Anspruch 19,
**dadurch gekennzeichnet,**
**dass** aneinandergrenzende Flachelemente von rechtwinklig oder in etwa rechtwinklig aufeinander stoßenden Rahmen (102, 104, 106, 108) über eine Steckverbindung verbunden sind, die sich ihrerseits innerhalb einer der Rundelemente (134, 136, 138, 140) erstreckt.

**Claims**

**1.** A carrier (10, 38, 100) for structural parts to be subjected to a heat-treatment process, comprising at least one frame (11, 40, 102, 104, 106, 108, 110) and a lattice (20, 50, 112, 114, 116, 118, 120) consisting of intersecting strands proceeding therefrom, wherein the frame consists of one or more limbs (12, 14, 16, 18, 42, 44, 46, 48, 121, 122, 124, 125, 126, 128, 130, 132, 134, 136, 138, 140) preferably forming a polygon, and wherein the frame (11, 40, 102, 104, 106, 108, 100) consists of temperature-resistant material and the strands of carbon fibers or ceramic fibers which extending from the limb or limbs (12, 14, 18, 42, 44, 46, 48, 121, 122, 124, 125, 126, 128, 130, 132, 134, 136, 138, 140) of the frame form the lattice (20, 50, 112, 114, 116, 118, 120),
**characterized in**
**that** the lattice (20 50) is formed by a section of an endless fiber bundle extending between limbs (12, 14, 16, 18, 42, 44, 46, 48) of the frame in the form of single-layer or multilayer fiber strands or intertwined yarns of a carbon-reinforced carbon material and/or ceramic material, the endless fiber bundle extending in a warp-wef-woven structure between limbs of the frame.

**2.** The carrier according to claim 1,
**characterized in**
**that** the limbs (12, 14, 16, 18, 42 44, 46, 48) of the frame extend perpendicular to the plane formed by the lattice (20, 50).

**3.** The carrier according to claim 2,
**characterized in**
**that** the carrier (100) consists of several frames (102, 104, 106, 108, 110) forming a three-dimensional body and, in particular, has a basket geometry.

**4.** The carrier according to at least claim 1,
**characterized in**
**that** the limbs (12, 14, 16, 18) have recesses in their respective longitudinal edges, sections of the endless fiber bundle passing through said recesses to stretch the lattice (20, 50).

**5.** The carrier according to claim 4,
**characterized in**
**that** the recesses form a comb geometry in the respective longitudinal edge (24, 26, 28, 30) of the limb (12, 14, 16, 18) of the frame.

**6.** The carrier according to at least claim 1,
**characterized in**
**that** the limbs (42, 44, 46, 48) of the frame (40) have openings such as bores (52, 54) through which the endless fiber bundle passes.

**7.** The carrier according to at least claim 1,
**characterized in**
**that** the endless fiber bundle laid in the woven structure extends under prestress between the limbs (12, 14, 16, 18, 42, 44, 46, 48).

**8.** The carrier according to at least claim 1,
**characterized in**
**that** the frame (11, 52) is integrally cut out of a carbon fiber-reinforced carbon plate.

**9.** The carrier according to at least claim 1,
**characterized in**
**that** the limbs (42, 44, 46, 48) forming the frame (40) are joined together by means of plug connections.

**10.** The carrier according to at least claim 1,
**characterized in**
**that** the base of the frame (11, 38) or its limbs (12, 14, 16, 18, 42, 44, 46, 48) is a pyrolyzed fiber preform produced by means of TFP technology.

**11.** The carrier according to at least claim 1,
**characterized in**

**that** the frame (11, 40) consists of a section or sections separated, in particular, by means of water jet cutting from a carbon fiber-reinforced carbon plate, such as a CFC plate.

12. The carrier according to at least claim 1,
    **characterized in**
    **that** the fiber material consists of or contains $Al_2O_3$ and/or SiC and/or BN and/or C.

13. The carrier according to at least claim 1,
    **characterized in**
    **that** the lattice (20, 50) has a matrix which comprises or contains carbon, $B_4C$, $Al_2O_3$, SiC, $Si_3N_4$ and/or mullite.

14. The carrier according to claim 13,
    **characterized in**
    **that** the matrix is separated from the gas phase and/or formed by pyrolysis of a precursor material.

15. The carrier according to claim 14,
    **characterized in**
    **that** the precursor material is phenolic resin and/or furan resin and/or a Si precursor.

16. The carrier according to at least claim 1,
    **characterized in**
    **that** at least the lattice has or contains a coating of oxides, nitrides and/or carbides of the third and fourth main group and/or third to sixth subgroup of the periodic system and/or carbon.

17. The carrier according to at least claim 1,
    **characterized in**
    **that** the frame (11, 40) consists of carbon fiber-reinforced carbon, fiber ceramic or graphite.

18. The carrier according to at least claim 1,
    **characterized in**
    **that** the carrier (100) has a parallelepiped geometry open on one side with bottom and side frames (102, 104, 106, 108, 110) which are each holders for a lattice (112, 114, 116, 118, 120).

19. The carrier according to at least claim 18,
    **characterized in**
    **that** the upper limb (121, 122, 124, 125) of each side frame (112, 114, 116, 118) is a flat element and/or the lower limb (126, 128, 130, 132) of each side frame is an angular element and/or limbs (134, 136, 138, 140) at a right angle thereto are each a round element.

20. The carrier according to at least claim 19,
    **characterized in**
    **that** the flat element forms, with its flat side, a plane in which or in approximately which the lattice (112, 114, 116, 118) defined by the frame (102, 104, 106, 108) extends.

21. The carrier according to at least claim 19,
    **characterized in**
    **that** the respective flat element (121, 122, 124, 125) of the side frame (112, 114, 116, 118) on the outer longitudinal peripheral side passes over in a flush manner into respective abutting face of a round element (134, 136, 138, 140).

22. The carrier according to at least claim 19,
    **characterized in**
    **that** adjoining flat elements of rectangular or approximately rectangular abutting frames (102, 104, 106, 108) are connected via a plug connection which, in turn, extends within one of the round elements (134, 136, 138, 140).

**Revendications**

1. Support (10, 38, 100) pour composants à soumettre à un procédé de traitement thermique, comprenant au moins un cadre (11, 40, 102, 104, 106, 108, 110) et des brins s'entrecroisant formant la grille (20, 50, 112, 114, 116, 118, 120) partant de ce même cadre, sachant que le cadre est composé d'une ou plusieurs branches (12, 14, 16, 18, 42, 44, 46, 48, 121, 122, 124, 125, 126, 128, 130, 132, 134, 136, 138, 140) formant de préférence un polygone, que le cadre (11, 40, 102, 104, 106, 108, 100) est composé d'un matériau résistant à la chaleur et que les brins sont constitués de fibres de carbone ou de fibres de céramique qui forment la grille (20, 50, 112, 114, 116, 118, 120) partant de la branche ou des branches (12, 14, 18, 42, 44, 46, 48, 121, 122, 124, 125, 126, 128, 130, 132, 134, 136, 138, 140) du cadre,
   **caractérisé en ce**
   **que** la grille (20, 50) est formée par une section d'un faisceau de fibres sans fin s'étendant entre les branches (12, 14, 16, 18, 42, 44, 46, 48) du cadre et étant formé d'une ou plusieurs couches de brins de fibre ou de fils retordus en matériau de carbone renforcé en carbone et/ou en matériau céramique, sachant que le faisceau de fibres sans fin s'étend entre les branches du cadre sous forme de structure tissée en chaîne trame.

2. Support selon la revendication 1,
   **caractérisé en ce**
   **que** les branches (12, 14, 16, 18, 42, 44, 46, 48) du cadre s'étendent verticalement par rapport au niveau tendu à partir de la grille (20, 50).

3. Support selon la revendication 2,
   **caractérisé en ce**
   **que** le support (100) est composé de plusieurs cadres (102, 104, 106, 108, 110) formant un corps tridimensionnel, et présente en particulier la géométrie d'un panier.

4. Support selon la revendication 1,
   **caractérisé en ce**
   **que** les branches (12, 14, 16, 18) présentent sur leurs bords longitudinaux respectifs des évidements logeant des sections du faisceau de fibres sans fin afin de tendre la grille (20, 50).

5. Support selon la revendication 4,
   **caractérisé en ce**
   **que** les évidements forment une géométrie en peigne dans chacun des côtés longitudinaux (24, 26, 28, 30) de la branche (12, 14, 16, 18) du cadre.

6. Support selon au moins la revendication 1,
   **caractérisé en ce**
   **que** les branches (42, 44, 46, 48) du cadre (40) présentent des ouvertures telles que des perçages (52, 54) qui sont traversés par le faisceau de fibres sans fin.

7. Support selon au moins la revendication 1,
   **caractérisé en ce**
   **que** le faisceau de fibres sans fin posé en structure tissé s'étend sous précontrainte entre les branches (12,14,16, 18, 42, 44, 46, 48).

8. Support selon au moins la revendication 1,
   **caractérisé en ce**
   **que** le cadre (11, 52) est entièrement découpé dans une plaque de carbone renforcée en carbone.

9. Support selon au moins la revendication 1,
   **caractérisé en ce**
   **que** les branches (42, 44, 46, 48) formant le cadre (40) sont assemblées au moyen de fiches de raccordement.

10. Support selon au moins la revendication 1,
    **caractérisé en ce**
    **que** la base du cadre (11, 38) ou de ses branches (12, 14, 16, 18, 42, 44, 46, 48) est une préforme de fibre pyrolysée fabriquée à l'aide de la technique TFP (Tailored Fiber Placement).

11. Support selon au moins la revendication 1,
    **caractérisé en ce**
    **que** le cadre (11, 40) est composé d'une section détachée ou de sections détachées d'une plaque de carbone renforcée en carbone telle qu'une plaque CFC (Carbon Fiber Composite), de préférence par découpage au jet d'eau.

12. Support selon au moins la revendication 1,
    **caractérisé en ce**

**que** le matériau fibreux est composé d'$Al_2O_3$ et/ou de SiC et/ou de BN et/ou de C ou en contient.

13. Support selon au moins la revendication 1,
    **caractérisé en ce**
    **que** la grille (20, 50) présente une matrice qui est constituée de carbone, de $B_4C$, d'$Al_2O_3$, de SiC, de $Si_3N_4$ et/ou de mullite ou en contient.

14. Support selon la revendication 13,
    **caractérisé en ce**
    **que** la matrice est déposée en phase gazeuse et/ou formée par pyrolyse d'un matériau précurseur.

15. Support selon la revendication 14,
    **caractérisé en ce**
    **que** le matériau précurseur est de la résine phénolique et/ou de la résine furanique et/ou un précurseur Si.

16. Support selon au moins la revendication 1,
    **caractérisé en ce**
    **qu'**au moins la grille présente un revêtement composé d'oxydes, de nitrures et/ou de carbures du 3ème et 4ème groupe principal et/ou des groupes secondaires 3 à 6 du système périodique et/ou du carbone, ou en contient.

17. Support selon au moins la revendication 1,
    **caractérisé en ce**
    **que** le cadre (11, 40) est constitué de carbone renforcé en fibres de carbone, de céramique fibreuse ou de graphite.

18. Support selon au moins la revendication 1,
    **caractérisé en ce**
    **que** le support (100) présente une géométrie parallélépipédique ouverte d'un côté avec des cadres latéraux et de fond (102, 104, 106, 108, 110) qui forment respectivement des supports pour une grille (112, 114, 116, 118, 120).

19. Support selon au moins la revendication 18,
    **caractérisé en ce**
    **que** la branche supérieure (121, 122, 124, 125) de chaque cadre latéral (112, 114, 116, 118) est un élément plat et/ou que la branche inférieure (126, 128, 130, 132) de chaque cadre latéral est un élément angulaire et/ou que les branches latérales (134, 136, 138, 140) s'étendant verticalement par rapport à ceux-ci sont respectivement un élément circulaire.

20. Support selon au moins la revendication 19,
    **caractérisé en ce**
    **que** l'élément plat tend avec son côté plat un niveau dans lequel ou approximativement dans lequel la grille (112, 114, 116, 118) tendue par le cadre (102, 104, 106, 108) s'étend.

**21.** Support selon au moins la revendication 19, **caractérisé en ce que** les éléments plats respectifs (121, 122, 124, 125) du cadre latéral (112, 114, 116, 118) se terminent du côté du bord longitudinal extérieur et à hauteur identique dans une surface frontale respective d'un élément circulaire (134, 136, 138, 140).

**22.** Support selon au moins la revendication 19, **caractérisé en ce que** les éléments plats contigus de cadres (102, 104, 106, 108) se rencontrant à angles droits ou approximativement à angles droits sont reliés par une fiche de raccordement qui s'étend de son côté à l'intérieur de l'un des éléments circulaires (134, 136, 138, 140).

Fig.1

Fig.2

100

136 142 124

128 120 121

104 114 112 102

138 110 122 144 126

124 124

106 118 134

130 116 140 148 132 108 125

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19957906 A
- DE 29512569 U
- DE 19737212 A
- JP 2000304459 A
- EP 0560038 A
- US 2962273 A